# EUROPÄISCHE PATENTSCHRIFT

(11) **EP 2 294 775 B1**
(45) Veröffentlichungstag und Bekanntmachung des Hinweises auf die Patenterteilung: **14.02.2018**
(21) Anmeldenummer: 09765466.9
(22) Anmeldetag: 23.03.2009
(51) Int. Cl.: H04L 29/06, H04W 12/08

(54) **SONDERMOBILFUNKVERSORGUNG MIT EIGENEM ACCESSMANAGEMENT UND SPERRFUNKTION**
SPECIAL MOBILE RADIO TELEPHONE SUPPLY WITH INHERENT ACCESS MANAGEMENT AND BLOCKING FUNCTION
COUVERTURE RADIO SPÉCIALE À GESTION D'ACCÈS PROPRE ET FONCTION D'INTERDICTION

(30) Priorität: 19.06.2008 DE 102008028817; 29.08.2008 DE 102008044929
(43) Veröffentlichungstag der Anmeldung: 16.03.2011
(73) Patentinhaber: Deutsche Telekom AG, 53113 Bonn (DE)
(72) Erfinder: KRAMARZ- VON KOHOUT, Gerhard, 53113 Bonn (DE); RÖBKE, Matthias, 50859 Köln (DE)
(74) Vertreter: Cohausz Hannig Borkowski Wißgott
(86) Internationale Anmeldenummer: PCT/EP2009/002116
(87) Internationale Veröffentlichungsnummer: WO 2009/152886

(56) Entgegenhaltungen:
- WO-A2-2008/008199
- WO-A2-2008/049132
- US-A- 6 002 679

## Beschreibung

Die Erfindung betrifft ein Verfahren zum Betrieb eines zellularen Mobilfunknetzes mit einer oder mehreren Funkzellen, in das Mobilfunkendgeräte zur Nutzung der Dienste des Mobilfunknetzes einbuchbar sind, wobei jedes im Mobilfunknetz eingebuchte Mobilfunkendgerät durch eine Teilnehmeridentität eindeutig identifizierbar ist, wobei jedes im Mobilfunknetz eingebuchte Mobilfunkendgerät durch eine Teilnehmeridentität eindeutig identifizierbar ist, wobei die Teilnehmeridentität eines eingebuchten Mobilfunkendgerätes mit einer Liste freigegebener Teilnehmeridentitäten verglichen wird und bei Übereinstimmung die Nutzung der Dienste des Mobilfunknetzes für das Mobilfunkendgerät freigegeben wird, und wobei bei fehlender Übereinstimmung der Teilnehmeridentität mit der Liste der freigegebenen Teilnehmeridentitäten eine Sperrung der Nutzung der Dienste des Mobilfunknetzes für diese Teilnehmeridentität und/oder für dieses Mobilfunkendgerät erfolgt.

Die Erfindung betrifft ferner ein zellulares Mobilfunksystem zur Ausführung und Anwendung des Verfahrens, aufweisend ein Mobilfunknetzwerk mit einer oder einer Mehrzahl von Funkzellen, in das sich Mobilfunkendgeräte zur Nutzung der Dienste des Mobilfunksystems einbuchen können, wobei das System dazu eingerichtet ist, die Teilnehmeridentität eines jeden eingebuchten Mobilfunkendgerätes und/oder eines nicht eingebuchten Mobilfunkendgerätes mit einer in einer dem System zugeordneten Datenbank gespeicherten Liste freigegebener Teilnehmeridentitäten zu vergleichen und bei Übereinstimmung für das Mobilfunkendgerät die Nutzung der Dienste des Mobilfunknetzes freizugeben, und bei fehlender Übereinstimmung der Teilnehmeridentität mit der Liste der freigegebenen Teilnehmeridentitäten eine Sperrung der Nutzung der Dienste des Mobilfunknetzes für diese Teilnehmeridentität und/oder für dieses Mobilfunkendgerät vorzunehmen.

Ein Verfahren der genannten Gattung ist aus der internationalen Anmeldung WO 2008/049132 A2 bekannt, Ein ähnliches Verfahren offenbart die internationale Anmeldung WO 2008/008199 A2.

Der Begriff "Mobilfunkendgerät" umfasst hier auch die dem Mobilfunkendgerät zugeordnete, teilnehmerspezifische SIM/USIM (Chipkarte oder andere Bauform, aber auch Softwarelösungen, wie z.B. eine Virtual SIM/USIM), welche Träger der Teilnehmeridentität IMSI ist.

Insbesondere betrifft die Erfindung ein System, um ein gewisses Gebiet mit Mobilfunk zu versorgen, wobei dieses Gebiet bereits ganz oder teilweise mit Mobilfunk derselben oder kompatibler Netztechnik (insbesondere GSM, UMTS, aber auch Techniken der nächsten Mobilfunkgeneration wie z.B. LTE) versorgt ist, wobei das Accessmanagement sicherstellt, dass in diesem Gebiet eine Gruppe von Nutzern weder die eine noch die andere Mobilfunkversorgung zur Kommunikation nutzen kann und dass eine andere Gruppe von Nutzern nur die zusätzlich geschaffene Mobilfunkversorgung nutzen kann.

In Gefängnissen ist in der Regel den Häftlingen der Besitz und die Nutzung von Mobilfunkendgeräten verboten. Die Detektion von Endgeräten mittels Leibesvisitation oder Metalldetektoren gestaltet sich häufig schwierig. Insofern werden in manchen Gefängnissen Störsender eingesetzt. Diese stören die Frequenzen der lokalen Mobilfunksender (GSM, UMTS, aber auch Techniken der nächsten Mobilfunkgeneration wie z.B. LTE), so dass Gefangene, die im Besitz eines Mobilfunkendgerätes sind, dieses nicht nutzen können. Allerdings stören die Störsender nicht nur diese unerlaubte Mobilfunkkommunikation, sondern möglicherweise auch erlaubte Mobilfunkkommunikation. Die Störung durch die Störsender kann auch zulässige Mobilfunkkommunikation etwa des Personals innerhalb des Gefängnisses beeinträchtigen oder verhindern. Je nach baulicher Gestaltung des Gefängnisses und Stärke des Störsenders kann auch zulässige Mobilfunkkommunikation Dritter außerhalb des Gefängnisareals beeinträchtigt oder verhindert werden.

Denkbar wäre auch der Einsatz sogenannter IMSI-Catcher, wie sie in EP 10151053 B1 vorgeschlagen werden. Ein solcher IMSI-Catcher stellt eine virtuelle Funkzelle zu einem Mobilfunknetz dar, wobei die virtuelle Funkzelle Parameter einer realen Funkzelle des Mobilfunknetzes aus der näheren Umgebung übernimmt. Diese Funkzelle ist insofern virtuell, weil sie nicht in das Mobilfunknetz integriert ist, so dass beispielsweise Anrufe nicht vom Mobilfunknetz in diese Zelle weitergeleitet werden können. Mit dem IMSI-Catcher lassen sich die Mobilfunkendgeräte, für die diese virtuelle Funkzelle die funktechnisch attraktivste Zelle ist, "fangen". Hierbei kann die IMSI und IMEI der SIM/USIM bzw. des Endgerätes des Nutzers ausgewertet werden. Während es gefangen ist, kann es nicht angerufen werden. Je nach Konfiguration des IMSI-Catchers könnte es eine abgehende Kommunikationsverbindung aufbauen über eine SIM/USIM, die Teil des IMSI-Catchers ist und in einem der SIM/USIM erlaubten Mobilfunknetz eingebucht ist. Abgehende Gespräche würden dann mittels dieser SIM/USIM in das Mobilfunknetz geleitet und auch über diese abgerechnet. Es ist darüber hinaus bekannt, dass IMSI-Catcher in einer speziellen Ausprägung diese Möglichkeit zum Anrufen sperren können. Weiterhin kann ein heutiger IMSI-Catcher die "gefangenen" Endgeräte beliebig lange festhalten, so dass ein gefangenes Mobilfunkendgerät in dieser Zeit weder anrufen noch angerufen werden kann. Das Halten der Endgeräte in der virtuellen "IMSI-Catcher-Zelle" endet erst, wenn der IMSI-Catcher deaktiviert wird oder sich das Mobilfunkendgerät außerhalb der virtuellen Zelle neu in ein reguläres Mobilfunknetz einbucht.

Die virtuelle Zelle des IMSI-Catchers bezieht sich, wie beschrieben, auf ein einzelnes Mobilfunknetz. Mobilfunkendgeräte mit Karten anderer nationaler Mobilfunknetze werden in der Regel nicht gefangen, da die SIM/USIM zumeist einen entsprechenden Eintrag in der Liste der "forbidden PLMN" enthält.

Würde ein IMSI-Catcher innerhalb eines Gefängnisses eingesetzt werden, so könnte ein IMSI-Catcher innerhalb des Wirkgebietes seiner virtuellen Zelle und für das Mobilfunknetz, für das er ausgelegt ist, die Kommunikation der Häftlinge verhindern. Um weitere Mobilfunknetze zu blockieren, müssten entsprechend weitere IMSI-Catcher mit jeweils passender SIM/USIM installiert werden. Weiterer Nachteil wäre auch hier, dass innerhalb des Wirkgebietes der virtuellen Zelle des IMSI-Catchers ggf. auch das Personal oder unbeteiligte Dritte außerhalb des Gefängnisses betroffen sind, so dass diese ggf. nicht angerufen werden können oder nicht anrufen können, obwohl es ihnen erlaubt wäre. Dies könnte höchst negative Konsequenzen haben, wenn durch den Einsatz eines IMSI-Catchers beispielsweise ein Notruf nicht abgesetzt werden könnte, weil sich der Anrufer im Wirkgebiet des IMSI-Catchers aufhält.

Die Aufgabe der Erfindung ist es, die genannten Nachteile zu überwinden und es insbesondere zu ermöglichen, dass ein gewisses vorgegebenes Gebiet (etwa das Areal eines Gefängnisses oder dergleichen) durch das Wirkgebiet des Systems abgedeckt wird, dass dort dann nur diejenigen die Mobilkommunikation nutzen können, die dieses dürfen, und dass außerhalb des vorgegebenen Gebietes das System grundsätzlich keine störenden Auswirkungen zeigt.

Diese Aufgabe wird erfindungsgemäß durch das in den unabhängigen Ansprüchen angegebene Verfahren bzw. System gelöst.

Vorteilhafte Ausgestaltungen und Weiterbildungen der Erfindung ergeben sich aus den abhängigen Ansprüchen.

Besonders vorteilhaft bei dem erfindungsgemäßen Verfahren zum Betrieb eines zellularen Mobilfunknetzes sowie bei dem zellularen Mobilfunksystem, welches insbesondere zur Ausführung und Anwendung des erfindungsgemäßen Verfahrens geeignet und eingerichtet ist, aufweisend ein Mobilfunknetzwerk mit einer Mehrzahl von Funkzellen, in das sich Mobilfunkendgeräte zur Nutzung der Dienste des Mobilfunksystems einbuchen können, ist es, dass die Teilnehmeridentität eines jeden eingebuchten Mobilfunkendgerätes mit einer Liste freigegebener Teilnehmeridentitäten verglichen wird und bei Übereinstimmung für das zugehörige Mobilfunkendgerät die Nutzung der Dienste des Mobilfunknetzes in der Funkzelle freigegeben wird, und bei fehlender Übereinstimmung der Teilnehmeridentität mit der Liste der freigegebenen Teilnehmeridentitäten eine Sperrung der Nutzung der Dienste des erfindungsgemäßen Mobilfunknetzes und / oder eine generelle Sperre der Nutzung aller Mobilfunknetze für das zugehörige Mobilfunkendgerät und/oder für die Teilnehmeridentität erfolgen. Darüber hinaus können Informationen über aktive Teilnehmeridentitäten von in anderen Mobilfunknetzen eingebuchten Mobilfunkendgeräten ausgewertet werden. Diese Informationen, die beispielsweise Kennungen und Ortsinformationen umfassen können, werden beispielsweise von Detektionseinrichtungen bereitgestellt.

Besonders bevorzugt ist das Mobilfunknetzwerk aus kleinteiligen, engmaschigen Funkzellen zusammengesetzt, deren Signalleistung die Signalleistung anderer empfangbarer Mobilfunknetze lokal übersteigt. Ein derart angelegtes Mobilfunknetzwerk ermöglicht es in für die Praxis hinreichender Genauigkeit, ein gegebenes Gebiet mit einem weiteren Mobilfunknetzwerk zu versorgen, so dass innerhalb des gegebenen Gebietes dieses Mobilfunknetzwerk das Mobilfunknetzwerk mit der lokal jeweils stärksten Signalleistung ist, aber außerhalb des gegebenen Gebietes dieses Mobilfunknetzwerk eine schwächere Signalleistung als dort bereits vorhandene Mobilfunknetzwerke aufweist. Die schwächere Signalleistung des innerhalb angelegten Mobilfunknetzwerkes bewirkt, dass die außerhalb vorhandenen Mobilfunknetze außerhalb von dem innerhalb angelegten Mobilfunknetzwerk nicht gestört werden. Je leistungsärmer die einzelnen Funkstationen des Mobilfunknetzwerkes sind, desto höher ist die Genauigkeit der Abgrenzung nach außen, die erreicht werden kann.

Eine eindeutige Identifizierung der Teilnehmeridentität ist insbesondere durch eine Abfrage und Überprüfung der International Mobile Subscriber Identity (IMSI) möglich, die der eindeutigen Identifizierung von Netzteilnehmern (interne Teilnehmerkennung) in einem Mobilfunknetzwerk dient. Durch einen Abgleich mit einer Freigabeliste ("White List"), in der alle in dem lokalen Gebiet und/oder Mobilfunknetzwerk zur Nutzung der Dienste des Netzwerkes zugelassenen Teilnehmer mit der zugehörigen International Mobile Subscriber Identity (IMSI) gespeichert sind, ist eine zuverlässige Überprüfung der Nutzungsberechtigung gewährleistet und es wird eine unberechtigte Nutzung der Dienste des Mobilfunknetzwerkes unterbunden.

Alternativ oder kumulativ zu einem Listeabgleich mit einer Liste zugelassener Netzwerkteilnehmer, wie der oben beschriebenen "White List", erhalten die Berechtigten Mobilfunkkarten mit einer Access Class gemäß 3GPP 22.011 ungleich 0...9. Da übliche Mobilfunkkarten (also grundsätzlich auch die Mobilfunkkarten z.B. der Häftlinge in einer Haftanstalt) eine Access Class gleich 0...9 haben, führt bereits eine Sperrung dieser Access Classes 0...9 im obigen zentralen System zur Sperrung der Kommunikationsmöglichkeiten unberechtigter Teilnehmer, insbesondere der Häftlinge, denn es ist dem Nutzer einer Mobilfunkkarte nicht möglich, die Access Class seiner Karte zu ändern. Die Führung einer speziellen White List kann hierbei entfallen. Es ist allerdings zu beachten, dass nicht ausgeschlossen werden kann, dass auch ein Häftling Zugriff auf eine Mobilfunkkarte mit spezieller Access Class ungleich 0...9 erhält, da die Herkunft seiner Mobilfunkkarte nicht bekannt ist.

Besonders vorteilhaft ist es bei dem erfindungsgemäßen System, dass das vorgegebene Gebiet kleinzellig abgedeckt wird respektive werden kann, die Abgrenzung nach außen, wie oben ausgeführt, hinreichend trennscharf ist, dass innerhalb nur diejenigen kommend und gehend kommunizieren können, denen diese Möglichkeit über das Accessmanagement explizit zugewiesen ist, alle anderen aber weder kommend noch gehend kommunizieren können und dass außerhalb des vorgegebenen Gebietes die dort vorhandene Mobilfunkversorgung nicht beeinträchtigt ist. Das System kann so ausgestaltet werden, dass diejenigen, die über das Accessmanagement das Recht erhalten, kommend oder gehend zu kommunizieren, dieses Recht mit der Mobilfunkkarte eines beliebigen Netzbetreibers nutzen können.

Beispielsweise in einem Gefängnis ist es somit möglich, dass die Mobilfunkkommunikation der Häftlinge nachhaltig verhindert wird, hingegen explizit Berechtigte innerhalb des Gefängnisses kommunizieren können und die Mobilfunkkommunikation Dritter außerhalb des Gefängnisses nicht beeinträchtigt ist.

Das System kann aber auch in anderen Umgebungen eingesetzt werden, in denen in der Regel nicht kommuniziert werden darf, aber ggf. Einzelne berechtigt sind, dennoch zu kommunizieren. So gibt es Betreiber von Krankenhäusern sowie Kinos oder anderen Kulturstätten, die grundsätzlich den Besuchern, nicht aber ihren Bediensteten die Mobilkommunikation untersagen wollen. Denkbar ist auch eine zeitlich befristete Maßnahme, mittels der etwa bei einer Veranstaltung in einem Sportstadion aus Sicherheitsgründen die Mobilfunkkommunikation der Zuschauer, nicht aber diejenige der Sicherheitskräfte, nachhaltig unterbunden werden soll.

Vorzugsweise identifiziert sich jede Funkzelle durch eine globale Zellidentifikation (Cell Global Identification, CGI) gegenüber einem Mobilfunkendgerät, wobei die globale Zellidentifikation insbesondere eine Netzwerkkennung (Mobile Network Code, MNC) enthält, und eine Roaming- Netzkonfiguration mit anderen Mobilfunknetzen dergestalt erfolgt, dass grundsätzlich sich anderen Mobilfunknetzen zugeordnete Mobilfunkendgeräte in das Mobilfunknetz einbuchen können.

Dabei kann die globale Zellidentifikation (Cell Global Identification, CGI) zumindest aus einer Landeskennung (Mobile Country Code, MCC), einer Netzwerkkennung (Mobile Network Code, MNC), einer Ortskennung (Location Area Code, LAC) und einer Funkzellenkennung (Cell Id, CI) zusammengesetzt sein (siehe 3GPP TS 23.003).

Abhängig vom MNC entscheidet das Mobilfunkendgerät auf Basis einer auf der SIM/USIM Karte enthaltenen Liste von MNCs, in welche sich das Mobilfunkendgerät nicht einbuchen darf, ob die Zelle selektiert wird und somit ein Einbuchen stattfindet.

Erfindungsgemäß erhält jede Funkzelle auf dem zu versorgenden Gebiet einen "Mobile Network Code" (MNC), welcher in bisherigen Mobilfunknetzen nicht vorhanden ist. In Deutschland sind beispielsweise vier Mobilfunknetzbetreiber aktiv, jeder hat eine eigene MCC-MNC Kombination (262 xy, xy = 01 v 02 v 03 v 07). Weitere MNC (z.B. xy = 13) sind an andere Firmen vergeben, aber viele MNC sind bislang ungenutzt. Das System könnte daher Funkzellen mit beispielsweise MCC-MNC = 262 77 einsetzen.

Vorzugsweise wird ein Wechsel eines Mobilfunkendgerätes mit nicht freigegebener Teilnehmeridentität in ein anderes empfangbares Mobilfunknetz unterbunden. Hierdurch wird eine unberechtigte Nutzung von Diensten eines Mobilfunknetzes auch in dem Fall zuverlässig unterbunden, dass die Signalstärke eines anderen Mobilfunknetzes, welches an der lokalen Position ebenfalls eine Abdeckung bietet, stärker ist, und normalerweise ein Netzwechsel (Roaming) durchgeführt würde.

Eine weitere Ausprägung der Erfindung sieht vor, dass Endgeräte, welche wie beschrieben detektiert werden und deren zugehörige IMSI nicht auf der White List enthalten ist, mit Hilfe eines dedizierten "Sperrbefehls", welcher von dem System zur zentralen Steuerung an den der IMSI zugehörigen Netzbetreiber gesendet wird, in dessen Mobilfunknetz gesperrt werden. Auf diese Weise ist die SIM/USIM mit dieser IMSI gesperrt, mit einer solchen Karte kann weder im eigenen noch fremden Mobilfunknetzen kommuniziert werden. Ein Entsperren ist dann nur auf Anfrage bei dem zugehörigen Netzbetreiber möglich.

Weiterhin ist es auch möglich, im System zur zentralen Steuerung Informationen (z.B. Kennungen, Ortsinformationen) zu Teilnehmeridentitäten, die beispielsweise in anderen Netzen aktiv sind, zu empfangen und auszuwerten.

Zum einen kann geprüft werden, ob eine dieser Teilnehmeridentitäten auf der Liste der zugelassenen Teilnehmeridentitäten vorhanden ist. Wenn ja, kann diese von der Liste gelöscht werden, so dass diese nicht mehr im erfindungsgemäßen Mobilfunknetzwerk genutzt werden kann. Zum anderen kann die SIM/USIM mit dieser Teilnehmeridentität in deren Heimatnetz für die Netzdienste gesperrt werden, in dem ein Sperrbefehl an das Heimatnetz der Teilnehmeridentität gesendet wird.

Hierdurch können auch Teilnehmeridentitäten Berücksichtigung finden, ohne dass es eines Einbuchversuches der gesperrten oder zu sperrenden Teilnehmeridentität in dem Mobilfunknetzwerk bedarf. Eine solche Sperrung kann dementsprechend insbesondere über eine zentrale Instanz, die mit einem oder mehreren Mobilfunknetzen kommuniziert, erfolgen.

Besonders bevorzugt erfolgt bei dem Versuch eines Wechsels eines eingebuchten Mobilfunkendgerätes in ein anderes Mobilfunknetzwerk eine Überprüfung der im Heimatregister eingetragenen aktuellen Netzkennung.

Erfindungsgemäß wird bei einem Mobilfunkendgerät mit freigegebener Teilnehmeridentität eine spezielle Netzkennung im Heimatregister gespeichert, wobei ein Wechsel des Mobilfunkendgerätes in ein anderes Mobilfunknetzwerk nach einer Überprüfung der Netzkennung gestattet wird, aufgrund der speziellen Netzkennung, die auf eine Gestattung der Nutzung verweist, wobei bei einem Mobilfunkendgerät mit nicht freigegebener Teilnehmeridentität ein Wechsel in ein anderes Mobilfunknetzwerk nach einer Überprüfung der Netzkennung unterbunden wird.

Vorzugsweise werden alle eingebuchten Mobilfunkendgeräte in einer Funkzelle zunächst gefangen, so dass ein Wechsel in ein anderes Netz unmöglich ist zumindest bis zu einem Abgleich mit der Liste freigegebener Teilnehmeridentitäten.

Da auf der White List IMSIs beliebiger Mobilfunknetze stehen dürfen, müssen die Femtozellen auch parallel an sämtliche Mobilfunknetze des Landes angebunden sein, was über Internet / IP ohne Weiteres zu realisieren ist. Die IMSI liegt im Klartext vor. Weil bekanntlich aus der IMSI das zugehörige Mobilfunknetz hervorgeht, ist somit das Routing in ein passendes Mobilfunknetz möglich. Sollte die White List auch internationale IMSIs enthalten, so ist im System zusätzlich zu erfassen, mit welchem nationalen Mobilfunknetz eine Roamingbeziehung mit dem entsprechenden internationalen Netzbetreiber besteht. Das Routing selbst erfolgt auf Basis einer Tabelle, welche jedem Mobilfunknetz eine IP-Adresse zuweist. Diese IP-Adresse repräsentiert ein Gateway, welches beispielsweise bei UMTS-Technik gegenüber dem Mobilfunknetz über Radio Network Controller (RNC) - Funktionalität verfügt.

Dementsprechend ist das Mobilfunknetzwerk vorzugsweise mit weiteren verfügbaren Mobilfunknetzwerken gekoppelt, insbesondere über das Internet/IP, d.h. dass eine Kopplung mit den in dem jeweiligen Gebiet verfügbaren und/oder weiteren Mobilfunknetzwerken erfolgt. Bei den weiteren Mobilfunknetzwerken kann es sich wie oben erläutert um Inlandsnetze sowie Auslandsnetze handeln.

Es können somit insbesondere Roamingbeziehungen mit weiteren Mobilfunknetzen bestehen und die Liste der freigegebenen Teilnehmeridentitäten kann auch solche Teilnehmeridentitäten aus internationalen und/oder ausländischen Mobilfunknetzen aufweisen.

In dem Fall, dass ein Mobilfunkendgerät nicht in das Mobilfunknetz eingebucht ist, kann für die Teilnehmeridentität eines in diesem Mobilfunknetz nicht eingebuchten Mobilfunkendgerätes mittels Löschung auf einer Liste freigegebener Teilnehmeridentitäten eine Sperrung der Nutzung der Dienste dieses Mobilfunknetzes und / oder mittels eines Sperrbefehles an das Heimatnetz eine Sperrung der Nutzung der Dienste des Heimatnetzes erfolgen.

Hierdurch kann eine Sperrung eines Teilnehmers bzw.eines Mobilfunkendgerätes auch dann bewirkt werden, wenn das Endgerät nicht in das Mobilfunknetzwerk eingebucht ist, beispielsweise aufgrund einer abweichenden technischen Plattform, wenn es sich um ein UMTS-Netz handelt, jedoch um ein GSM-Endgerät. Die Teilnehmeridentität ist nicht technik-gebunden (Beispiel: Ein Endgerät, das sowohl GSM als auch UMTS unterstützt, kann mit einer einzigen SIM/USIM mit einer einzigen Teilnehmeridentität genutzt werden). Mit einem GSM-Endgerät kann man sich wegen der technischen Inkompatibilität nicht in das neu geschaffene UMTS-Netz einbuchen. Dies bedeutet umgekehrt, dass beispielsweise ein Häftling mit einem reinen GSM-Endgerät nicht von der neu geschaffenen Mobilfunkversorgung betroffen wäre und somit ungestört telephonieren könnte. Dieses Risiko kann durch das erfindungsgemäße Verfahren wirksam unterbunden werden.

Vorzugsweise besteht die Möglichkeit, dass Informationen zu einer Teilnehmeridentität eines in diesem Mobilfunknetz nicht eingebuchten Mobilfunkendgerätes online und / oder offline empfangen und ausgewertet werden, insbesondere von Detektionseinrichtungen und/oder von anderen Mobilfunknetzen und/oder von Behörden und dergleichen. Hierdurch kann beispielsweise seitens der Behörden wie Polizei und dergleichen auf einfache Weise eine Sperrung eines Teilnehmers bewirkt werden. Eine solche Sperrung kann dementsprechend insbesondere über eine zentrale Instanz, die mit einem oder mehreren Mobilfunknetzen kommuniziert, erfolgen.

Das Verfahren bzw. das System kann beispielsweise wie folgt realisiert werden: Jede Funkzelle identifiziert sich gegenüber dem Mobilfunkendgerät mit Hilfe der sogenannten "Cell Global Identification (CGI)". Gemäß 3GPP TS 23.003 setzt sich die CGI wie folgt zusammen:
"Mobile Country Code (MCC)" + "Mobile Network Code (MNC)" + "Location Area Code (LAC)" + "Cell ID (CI)".

Abhängig vom MNC entscheidet das Mobilfunkendgerät auf Basis einer auf der SIM/USIM Karte enthaltenen Liste von MNCs, in welche sich das Mobilfunkendgerät nicht einbuchen darf, ob die Zelle selektiert wird und somit ein Einbuchen stattfindet.

Erfindungsgemäß erhält jede Funkzelle auf dem zu versorgenden Gebiet einen "Mobile Network Code" (MNC), welcher in bisherigen Mobilfunknetzen nicht vorhanden ist. In Deutschland sind vier Mobilfunknetzbetreiber aktiv, jeder hat eine eigene MCC-MNC Kombination (262 xy, xy = 01 v 02 v 03 v 07). Weitere MNC (z.B. xy = 13) sind an andere Firmen vergeben, aber viele MNC sind bislang ungenutzt. Das System könnte daher Funkzellen mit beispielsweise MCC-MNC = 262 77 einsetzen.

Mit entsprechender Roamingkonfiguration kann auf diese Weise grundsätzlich jede SIM/USIM, auch eine SIM/USIM der nationalen Mobilfunknetze mit MCC-MNC = 262xy, das neue Mobilfunknetz nutzen, da die beschriebene MCC-MNC Kombination nicht in der Liste der nicht zu nutzenden Mobilfunknetze enthalten ist. Wenn einzelne Nutzer eine spezielle Mobilfunkkarte ihres Netzbetreibers erhalten, die speziell für diese MCC-MNC-Kombination (im Beispiel: 262 77) ausgelegt ist und zusätzliche Informationen zu dieser MCC-MNC-Kombination enthält, können diese auch eine spezielle Anzeige, die an das Einsatzgebiet angepasst sein mag (z.B: "JVA Bonn"), erhalten. Welche Anzeige Nutzer mit regulärer Mobilfunkkarte erhalten und ob sie auch einen Hinweis auf das neue Netz erhalten, hängt von der genutzten SIM/USIM und ggf. dem genutzten Mobilfunkendgerät ab.

Das System zur Steuerung der Funkzellen mit dem eigenen MCC-MNC ist so auszulegen, dass alle Mobilfunkendgeräte gefangen werden sowie dass deren IMSI mit einer Liste ("White List") abgeglichen werden. Mobilfunkendgeräte mit einer Mobilfunkkarte, deren IMSI auf der Liste enthalten ist, dürfen kommend und gehend kommunizieren. Alle anderen Mobilfunkendgeräte mit einer Mobilfunkkarte, deren IMSI nicht auf der Liste enthalten ist, werden dauerhaft gehalten und dürfen weder kommend und gehend kommunizieren. In einer besonderen Ausprägung könnten aber emergency calls (Notrufe) gestattet werden, auch wenn die IMSI nicht auf der White List enthalten ist.

Auf diese Weise ist sichergestellt, dass die Mobilfunkendgeräte sämtlicher Häftlinge, unabhängig davon, zu welchem nationalen oder internationalen Netzbetreiber deren SIM/USIM (Subscriber Identity Module) gehört, gefangen und gehalten werden und somit nicht kommunizieren können. Eine Kommunikation wäre dem Häftling nur dann möglich, wenn seine IMSI auf der genannten White List enthalten ist

Das Halten eines Endgerätes in den Zellen mit eigenem MCC-MNC-Code würde zunächst enden, wenn das Mobilfunkendgerät sich in ein anderes Mobilfunknetz einbucht.

Um dies zu verhindern bzw. dem Mobilfunkendgerät eine Kommunikation in diesem anderen Mobilfunknetz zu unterbinden, wird folgendes Verfahren vorgeschlagen:
Wenn sich ein Mobilfunkendgerät in das Mobilfunknetz mit eigenem MCC-MNC-Code (im Beispiel: 262 77) einbucht, wird in das Register HLR/-HSS des Heimatnetzes wie üblich das aktuelle Netz, hier also 262 77 eingetragen. In diesem Heimatnetz ist eine Funktion zu implementieren, die das aktuelle Netz auswertet und ein Umbuchen der Karte von 262 77 auf das Heimatnetz verhindert, ggf. unter zusätzlicher Auswertung der Cell ID (CI), so dass das Umbuchen nur dann verhindert wird, wenn sich das Mobilfunkendgerät in der Nähe des z.B. Gefängnisareals befindet. Betroffen von dieser Sperre wären die Häftlinge, aber ggf. auch die Berechtigten. Um die Berechtigten, deren IMSI auf der White List erfasst ist, vor dieser hier beschriebenen Sperre durch das Heimatnetz zu schützen, wird erfindungsgemäß ausschließlich für diesen Zweck ein zweiter MCC-MNC-Code z.B. 262 78 verwendet. Dem Heimatregister HLR/-HSS des Heimatnetzes wird für die Berechtigten, d.h. für die IMSI, die auf der White List erfasst sind, als aktuelles Netz nicht 262 77, sondern 262 78 übermittelt. Für die Berechtigten wäre ein Einbuchen in ihr Heimatnetz somit jederzeit möglich. Es ist ebenso für die Berechtigten ein Einbuchen in ein anderes vorhandenes Netz möglich, wenn dies für die jeweilige IMSI grundsätzlich auf Grund bestehender, ggf. nationaler Roamingbeziehungen zulässig ist.

Die Funkzellen sind grundsätzlich als leistungsarme Funkzellen (z.B. Femtozellen, die über Internet an das zugehörige Mobilfunknetz angeschlossen werden) auszulegen. Bei der Dimensionierung ist einerseits darauf zu achten, dass die neu installierten Funkzellen im gewünschten Gebiet (etwa das eines vorgegebenen Gefängnisareals) eine funktechnische Versorgung bieten, die die dort vorhandene funktechnische Versorgung durch andere Mobilfunknetze etwa mit üblichen Makrozellen übertrifft. Bei der Dimensionierung ist andererseits darauf zu achten, dass die Funkzellen möglichst leistungsarm sind, damit die Versorgung von Gebieten außerhalb des gewünschten Gebietes durch die dort vorhandene funktechnische Versorgung durch andere Mobilfunknetze sichergestellt ist und nicht durch die neu installierten Funkzellen übertroffen wird. Grundsätzlich gilt: Je mehr Funkzellen neu installiert werden, desto leistungsschwacher kann die einzelne Funkzelle sein. Insofern können beide Anforderungen ohne Weiteres erfüllt werden.

Auf diese Weise ist es möglich, das gewünschte Gebiet optimal zu versorgen, ohne dass Gebiete jenseits des gewünschten Gebietes versorgt werden. Gerade wenn die Femtozellen nur innerhalb eines Gebäudes installiert werden, ist die Versorgung außerhalb des Gebäudes auch in unmittelbarer Nähe zum Gebäude nur marginal, so dass man davon sprechen kann, dass die Versorgung durch die Femtozellen die vorhandene Versorgung außerhalb nicht stört.

Wie beschrieben, ist das System zur zentralen Steuerung der Funkzellen mit eigenen MCC-MNC so auszulegen, dass alle Mobilfunkendgeräte gefangen werden sowie dass deren IMSI mit einer Liste ("White List") abgeglichen werden. Femtozellen werden grundsätzlich über das Internet an das zugehörige Mobilfunknetz angebunden. Da auf der White List IMSIs beliebiger Mobilfunknetze stehen dürfen, müssen die Femtozellen auch parallel an sämtliche Mobilfunknetze des Landes angebunden sein, was über Internet / IP ohne Weiteres zu realisieren ist. Die IMSI liegt im Klartext vor. Weil bekanntlich aus der IMSI das zugehörige Mobilfunknetz hervorgeht, ist somit das Routing in ein passendes Mobilfunknetz möglich. Sollte die White List auch internationale IMSIs enthalten, so ist im System zusätzlich zu erfassen, mit welchem nationalen Mobilfunknetz eine Roamingbeziehung mit dem entsprechenden internationalen Netzbetreiber besteht. Das Routing selbst erfolgt auf Basis einer Tabelle, welche jedem Mobilfunknetz eine IP-Adresse zuweist. Diese IP-Adresse repräsentiert ein Gateway, welches beispielsweise bei UMTS-Technik gegenüber dem Mobilfunknetz über Radio Network Controller (RNC) - Funktionalität verfügt.

Das System zur zentralen Steuerung verfügt darüber hinaus über die üblichen Mobilfunknetzfunktionalitäten (bezüglich GSM, UMTS, LTE o.a.), um kommende und gehende Kommunikation zu ermöglichen.

Eine weitere Ausprägung der Erfindung sieht vor, dass Endgeräte, welche wie beschrieben detektiert werden und deren zugehörige IMSI nicht auf der White List enthalten ist, mit Hilfe eines dedizierten "Sperrbefehls", welcher von dem System zur zentralen Steuerung an den der IMSI zugehörigen Netzbetreiber gesendet wird, in dessen Mobilfunknetz gesperrt werden. Auf diese Weise ist die SIM/USIM mit dieser IMSI gesperrt, mit einer solchen Karte kann weder im eigenen noch fremden Mobilfunknetzen kommuniziert werden. Ein Entsperren ist dann nur auf Anfrage bei dem zugehörigen Netzbetreiber möglich.

In Abhängigkeit von den jeweiligen örtlichen Gegebenheiten kann für das vorgegebene Gebiet bereits Mobilfunkversorgung parallel durch unterschiedliche Techniken (z.B. parallel GSM und UMTS) bestehen. In einer solchen Situation sind verschiedene Ausprägungen der Erfindung möglich:
An das System zur zentralen Steuerung werden Funkzellen dieser unterschiedlichen Techniken in der beschriebenen Weise angebunden.

Alternativ wird für jede der unterschiedlichen Techniken ein System zur zentralen Steuerung implementiert, an das Funkzellen der jeweiligen Technik in der beschriebenen Weise angebunden werden. Eine weitere Ausprägung für diese Situation wird später beschrieben.

Es sind Detektionseinrichtungen bekannt, die lokal aktive IMSIs detektieren können. Es sei beispielsweise auf die bereits genannten IMSI-Catcher verwiesen. Die genannten IMSI-Catcher detektieren zwar die lokal aktiven IMSIs, leiten diese Informationen aber nicht weiter.

Für die erfindungsgemäße Anwendung ist nunmehr die Detektionseinrichtung mit einer Übertragungseinrichtung zu versehen. Detektionseinrichtung und das System zur zentralen Steuerung sind so miteinander zu verbinden (z.B. per Internet oder per lokalem Netzwerk), dass die Detektionseinrichtung Informationen an das System zur zentralen Steuerung übermitteln kann.

In einer weiteren alternativen Ausprägung kann somit das System zur zentralen Steuerung nicht nur Sperrbefehle senden, sondern auch zusätzliche Informationen zu aktiven IMSIs wie z.B. Kennungen oder Ortsinformationen empfangen und auswerten. Diese Informationen können insbesondere von Detektionseinrichtungen, die lokal aktive IMSIs detektieren können, oder aber von anderen Systemen, beispielsweise online, von Netzmanagementsystemen anderer Mobilfunknetze oder von Dritten (z.B. Polizei), beispielsweise offline, zur Verfügung gestellt werden.

Das System zur zentralen Steuerung kann bei Bedarf für auf diese Weise empfangene IMSIs Sperrbefehle an den der jeweiligen IMSI zugehörigen Netzbetreiber senden. Auf diese Weise können Teilnehmeridentitäten, die nicht auf der White List stehen und funktechnisch bzw. wegen fehlender Kompatibilität nicht von dem erfindungsgemäßen Mobilfunknetzwerk zur Sondermobilfunkversorgung des vorgegebenen Gebietes versorgt werden, dennoch gesperrt werden. Sollte eine auf diese Weise empfangene IMSI auf der White List stehen, so kann diese IMSI daraufhin von der White List gestrichen werden.

Wenn beispielsweise das erfindungsgemäße Mobilfunknetzwerk ausschließlich aus UMTS-Femtozellen besteht, kann sich ein GSM--Endgerät wegen mangelnder technischer Kompatibilität nicht in das Mobilfunknetzwerk einbuchen. Dennoch könnte es aber ein im vorgegebenen Gebiet ggf. bereits vorhandenes GSM-Netz nutzen. Über eine Detektionseinrichtung für GSM kann dieses Endgerät detektiert werden und nach Übermittlung der zugehörigen IMSI an das System zur zentralen Steuerung gesperrt werden, indem ein entsprechender Sperrbefehl an den der IMSI zugehörigen Netzbetreiber gesandt wird.

Hierbei ist zu beachten, dass nur solche Detektionseinrichtungen eingesetzt werden, welche möglichst genau nur die IMSI derjenigen Endgeräte detektieren, die sich auf dem vorgegebenen Gebiet befinden, damit nicht IMSIs von Endgeräten gesperrt werden, die sich außerhalb des vorgegebenen Gebietes befinden und deren Nutzer das Recht auf ungestörte Kommunikation haben.

Für das oben beschriebene Szenario, wenn nämlich für das vorgegebene Gebiet bereits Mobilfunkversorgung parallel durch unterschiedliche Techniken (z.B. parallel GSM und UMTS) besteht, ergibt sich somit eine weitere Ausprägung der Erfindung:
Ein Teil der im vorgegebenen Gebiet vorhandenen Techniken wird, wie oben beschrieben, mit einem oder mehreren "Systemen zur zentralen Steuerung" und zugehörigen Funkzellen erfasst. Für die sonstigen, im vorgegebenen Gebiet vorhandenen Techniken werden Detektionseinrichtungen implementiert, die ihre Informationen über aktive IMSIs mindestens einem der vorhandenen Systeme zur zentralen Steuerung zur Verfügung stellen.

Wenn beispielsweise das erfindungsgemäße Mobilfunknetzwerk mit einem oder zwei Systemen zur zentralen Steuerung parallel GSM- und UMTS-Funktionalitäten aufweisen würde, so wären Detektionseinrichtungen erst dann notwendig, wenn im vorgegebenen Gebiet zusätzlich LTE-Funkversorgung vorhanden wäre. Ab diesem Zeitpunkt wäre es die Aufgabe der Detektionseinrichtungen, dort die LTE-Endgeräte zu detektieren und die zugehörigen IMSIs dem System zur zentralen Steuerung zur Verfügung zu stellen.

In einer weiteren alternativen Ausprägung erhalten die Berechtigten Mobilfunkkarten mit einer Access Class gemäß 3GPP 22.011 ungleich 0...9. Da übliche Mobilfunkkarten (also grundsätzlich auch die Mobilfunkkarten der Häftlinge) eine Access Class gleich 0...9 haben, führt bereits eine Sperrung dieser Access Classes 0...9 im obigen zentralen System in der Regel zur Sperrung der Kommunikationsmöglichkeiten der Häftlinge, denn es ist dem Nutzer einer Mobilfunkkarte nicht möglich, die Access Class seiner Karte zu ändern. Die Führung einer speziellen White List kann hierbei entfallen. Es ist allerdings zu beachten, dass nicht ausgeschlossen werden kann, dass auch ein Häftling Zugriff auf eine Mobilfunkkarte mit spezieller Access Class ungleich 0...9 erhält, da die Herkunft seiner Mobilfunkkarte nicht bekannt ist.

Eine schematische Darstellung eines Ausführungsbeispieles ist in den Figuren angegeben. Es zeigen:
- Fig. 1: Die Überlagerung einer bestehenden Mobilfunkversorgung in einem eng begrenzten Gebiet durch ein erfindungsgemäß betriebenes kleinmaschiges Mobilfunknetz;
- Fig. 2: die schematische Verknüpfung mehrerer vorhandener Mobilfunknetze durch eine erfindungsgemäße Verfahrensweise zum Netzbetrieb;
- Fig. 3: die schematische Darstellung der Sperrung einer IMSI mittels der Steuerung des erfindungsgemäßen Mobilfunknetzes auf Basis von bereit gestellten Informationen;
- Fig. 4: die Überlagerung einer bestehenden Mobilfunkversorgung in einem eng begrenzten Gebiet zum einen durch ein erfindungsgemäß betriebenes kleinmaschiges Mobilfunknetz mit derselben Funktechnik und zum anderen durch eine Funkzelle mit anderer Funktechnik.

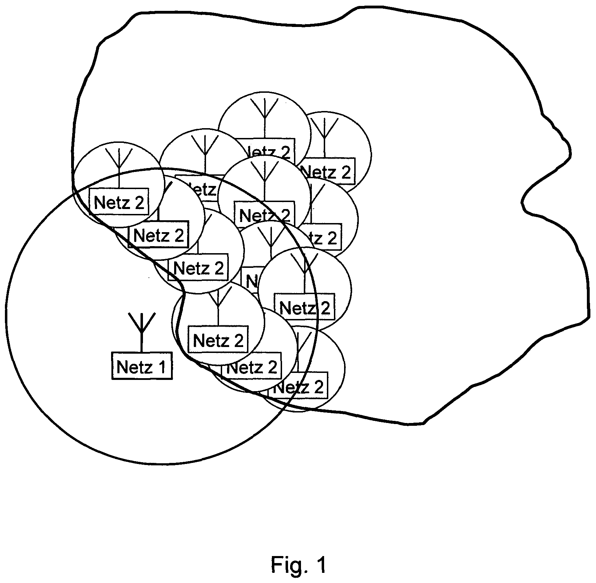

Gemäß Figur 1 stellt Netz 1 die bestehende Mobilfunkversorgung eines Teils eines Gebietes dar. Netz 2 stellt die Sondermobilfunkversorgung dar, welche die bestehende Mobilfunkversorgung durch Netz 1 überlagert, wobei die Grenzen des Gebietes weitestgehend respektiert werden.

Netz 2 ist ein kleinmaschiges Netz, d.h. ein aus kleinen, scharf abgegrenzten Zellen bestehendes zellulares Mobilfunknetz, dessen lokale Signalstärke jedoch die Signalstärke des ebenfalls empfangbaren Netzes 1 übersteigt.

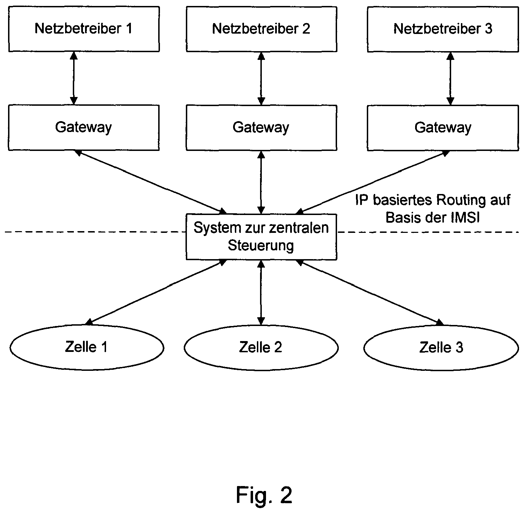

Die Roaming-Konfiguration zwischen Netz 1 und Netz 2 ist derart konfiguriert, dass die dem Netz 1 zugeordneten Mobilfunkendgeräte, d.h. die Teilnehmer im Netz 1, sich automatisch im Netz 2 einbuchen, wenn dieses das beste Signal liefert. Daher erfolgt in dem in Figur 1 dargestellten scharf abgegrenzten und vom Netz 2 abgedeckten Gebiet, welches das Netz 1 überlagert, ein Einbuchen der Mobilfunkendgeräte im Netz 2, wobei ein Nutzen der Dienste des Mobilfunknetzes 2 erst nach einer Überprüfung der Berechtigung gemäß des oben erläuterten Verfahrens gestattet wird, d.h. erst nach einem positiven Abgleich der Teilnehmeridentität IMSI (International Mobil Subscriber Identity) mit einer abgespeicherten White List, d.h. einem Verzeichnis der berechtigten Teilnehmer. Anderenfalls erfolgt eine Sperrung des Teilnehmer, d.h. des Mobilfunkendgerätes aufgrund der nicht zugelassenen Teilnehmeridentität IMSI. Aufgrund der Sperrung ist auch nach einem Verlassen des Gebietes des Netzes 2 ein Einbuchen im Netz 1 nicht mehr möglich, bis netzbetreiberseitig die Sperrung der Teilnehmeridentität IMSI aufgehoben wird. Die Sperrung erfolgt dadurch, dass ein Sperrbefehl an das Heimatnetz 1 eines Mobilfunkendgerätes mit nicht frei gegebener Teilnehmeridentität gesendet wird und diese dort für die Kommunikation in diesem und anderen Mobilfunknetzwerken gesperrt wird. Die Zellen des Sondernetzes werden über ein "System zur zentralen Steuerung" mit dem Gateway des entsprechenden Netzbetreibers verbunden, wie in Figur 2 dargestellt.

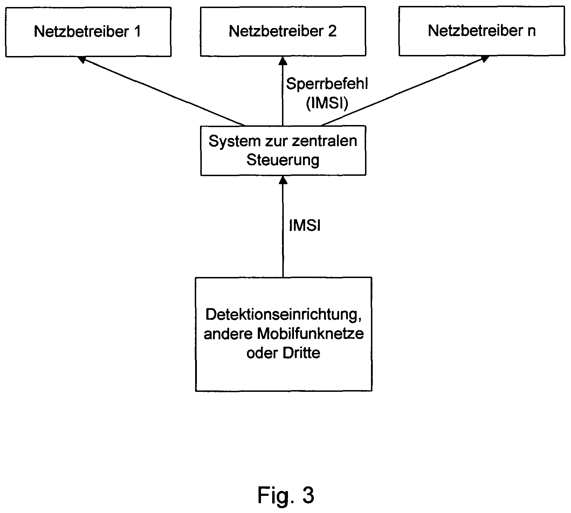

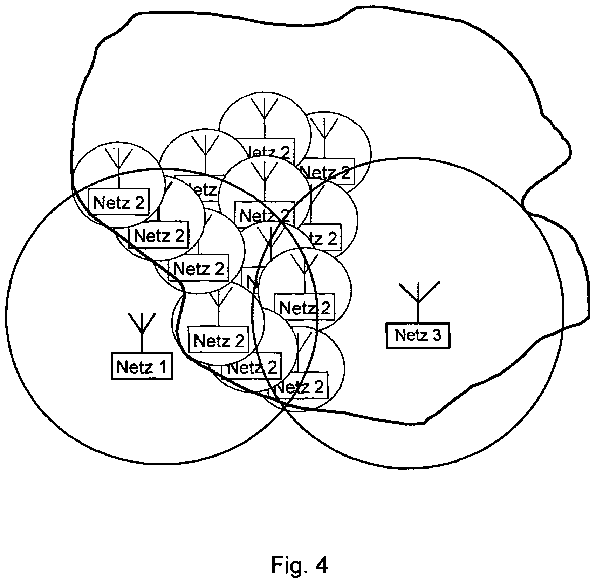

In Figur 4 wird dargestellt, dass ein Teil des vorgegebenen Gebietes durch nicht mit einander kompatible Netz 1 und 3 versorgt wird. Mit einer Detektionseinrichtung kann ein Endgerät, dass auf dem vorgegebenen Gebiet Netz 3 nutzt, detektiert werden. Figur 3 zeigt, dass die Detektionseinrichtung die IMSI dem Netz 2 zur Verfügung stellt. Netz 2 sendet daraufhin einen Sperrbefehl an den zur IMSI zugehörigen Netzbetreiber.

## Patentansprüche

1. Verfahren zum Betrieb eines zellularen Mobilfunknetzes mit einer oder mehreren Funkzellen, in das Mobilfunkendgeräte zur Nutzung der Dienste des Mobilfunknetzes einbuchbar sind, wobei jedes im Mobilfunknetz eingebuchte Mobilfunkendgerät durch eine Teilnehmeridentität eindeutig identifizierbar ist, wobei die Teilnehmeridentität eines eingebuchten Mobilfunkendgerätes mit einer Liste freigegebener Teilnehmeridentitäten verglichen wird und bei Übereinstimmung die Nutzung der Dienste des Mobilfunknetzes für das Mobilfunkendgerät freigegeben wird, und wobei bei fehlender Übereinstimmung der Teilnehmeridentität mit der Liste der freigegebenen Teilnehmeridentitäten eine Sperrung der Nutzung der Dienste des Mobilfunknetzes für diese Teilnehmeridentität und/oder für dieses Mobilfunkendgerät erfolgt, **dadurch gekennzeichnet, dass** jede Funkzelle auf dem zu versorgenden Gebiet eine spezielle Netzkennung erhält, die in anderen Mobilfunknetzen nicht vorhanden ist, wobei bei einem Mobilfunkendgerät mit nicht freigegebener Teilnehmeridentität diese spezielle Netzkennung im Heimatregister gespeichert wird und ein Wechsel des Mobilfunkendgerätes in ein anderes Mobilfunknetzwerk nach einer Überprüfung der Netzkennung unterbunden wird, und wobei bei einem Mobilfunkendgerät mit freigegebener Teilnehmeridentität eine andere spezielle Netzkennung im Heimatregister gespeichert wird und ein Wechsel des Mobilfunkendgerätes in ein anderes Mobilfunknetzwerk nach einer Überprüfung der Netzkennung gestattet wird.

2. Verfahren nach Anspruch 1, **dadurch gekennzeichnet, dass** sich jede Funkzelle durch eine globale Zellidentifikation gegenüber jedem in der Zelle eingebuchten Mobilfunkendgerät identifiziert, wobei die globale Zellidentifikation insbesondere eine von anderen Mobilfunknetzen nicht genutzte Netzwerkkennung enthält, und eine Roaming- Netzkonfiguration mit anderen Mobilfunknetzen dergestalt erfolgt, dass sich anderen Mobilfunknetzen zugeordnete Mobilfunkendgeräte in das Mobilfunknetz einbuchen können.

3. Verfahren nach Anspruch 2, **dadurch gekennzeichnet, dass** die globale Zellidentifikation zusammengesetzt ist zumindest aus einer Landeskennung, einer Netzwerkkennung, einer Ortskennung und einer Funkzellenkennung.

4. Verfahren nach einem der vorherigen Ansprüche, **dadurch gekennzeichnet, dass** ein Einbuchen eines Mobilfunkendgerätes mit nicht freigegebener Teilnehmeridentität in ein anderes empfangbares Mobilfunknetz unterbunden wird.

5. Verfahren nach einem der vorherigen Ansprüche, **dadurch gekennzeichnet, dass** bei dem Versuch eines Wechsels eines eingebuchten Mobilfunkendgerätes in ein anderes Mobilfunknetzwerk mittels der Teilnehmeridentität auf der zugehörigen SIM/USIM eine Überprüfung der im Heimatregister eingetragenen aktuellen Netzkennung erfolgt.

6. Verfahren nach einem der vorherigen Ansprüche, **dadurch gekennzeichnet, dass** alle eingebuchten Mobilfunkendgeräte mittels der Teilnehmeridentität auf der zugehörigen SIM/USIM zunächst gefangen werden, so dass ein Wechsel in ein anderes Netz unmöglich ist zumindest bis zu einem Abgleich mit der Liste freigegebener Teilnehmeridentitäten.

7. Verfahren nach einem der vorherigen Ansprüche, **dadurch gekennzeichnet, dass** ein Sperrbefehl an das Heimatnetz eines Mobilfunkendgerätes mit nicht frei gegebener Teilnehmeridentität gesendet wird und diese dort für die Kommunikation in diesem und anderen Mobilfunknetzwerken gesperrt wird.

8. Verfahren nach einem der vorherigen Ansprüche, **dadurch gekennzeichnet, dass** die Überprüfung der Nutzungsberechtigung anhand der Access-Class des Mobilfunkendgerätes erfolgt.

9. Verfahren nach einem der vorherigen Ansprüche, **dadurch gekennzeichnet, dass** das Mobilfunknetzwerk mit weiteren verfügbaren Mobilfunknetzwerken gekoppelt ist, insbesondere über das Internet.

10. Verfahren nach einem der vorherigen Ansprüche, **dadurch gekennzeichnet, dass** Roamingbeziehungen mit weiteren Mobilfunknetzen bestehen und die Liste der freigegebenen Teilnehmeridentitäten auch solche aus internationalen und/oder ausländischen Mobilfunknetzen aufweist.

11. Verfahren nach einem der vorherigen Ansprüche, **dadurch gekennzeichnet, dass** für die Teilnehmeridentität eines in diesem Mobilfunknetz nicht eingebuchten Mobilfunkendgerätes mittels Löschung auf einer Liste freigegebener Teilnehmeridentitäten eine Sperrung der Nutzung der Dienste dieses Mobilfunknetzes und / oder mittels eines Sperrbefehles an das Heimatnetz eine Sperrung der Nutzung der Dienste des Heimatnetzes erfolgen kann.

12. Verfahren nach Anspruch 11, **dadurch gekennzeichnet, dass** Informationen zu einer Teilnehmeridentität eines in diesem Mobilfunknetz nicht eingebuchten Mobilfunkendgerätes online und/oder offline empfangen und ausgewertet werden, insbesondere von Detektionseinrichtungen und/oder von anderen Mobilfunknetzen und/oder von Behörden und dergleichen empfangen werden.

13. Zellulares Mobilfunksystem zur Ausführung und Anwendung eines Verfahrens nach einem der vorherigen Ansprüche, aufweisend ein Mobilfunknetzwerk mit einer oder einer Mehrzahl von Funkzellen, in das sich Mobilfunkendgeräte zur Nutzung der Dienste des Mobilfunksystems einbuchen können, wobei das System dazu eingerichtet ist, die TeiJnehmeridentität eines jeden eingebuchten Mobilfunkendgerätes und/oder eines nicht eingebuchten Mobilfunkendgerätes mit einer in einer dem System zugeordneten Datenbank gespeicherten Liste freigegebener Teilnehmeridentitäten zu vergleichen und bei Übereinstimmung für das Mobilfunkendgerät die Nutzung der Dienste des Mobilfunknetzes freizugeben, und bei fehlender Übereinstimmung der Teilnehmeridentität mit der Liste der freigegebenen Teilnehmeridentitäten eine Sperrung der Nutzung der Dienste des Mobilfunknetzes für diese Teilnehmeridentität und/oder für dieses Mobilfunkendgerät vorzunehmen, **dadurch gekennzeichnet, dass** jede Funkzelle auf dem zu versorgenden Gebiet eine spezielle Netzkennung besitzt, die in anderen Mobilfunknetzen nicht vorhanden ist, wobei das System dazu eingerichtet ist, bei einem Mobilfunkendgerät mit nicht freigegebener Teilnehmeridentität diese spezielle Netzkennung im Heimatregister zu speichern und einen Wechsel des Mobilfunkendgerätes in ein anderes Mobilfunknetzwerk nach einer Überprüfung der Netzkennung zu unterbinden, und bei einem Mobilfunkendgerät mit freigegebener Teilnehmeridentität eine andere spezielle Netzkennung im Heimatregister zu speichern und einen Wechsel des Mobilfunkendgerätes in ein anderes Mobilfunknetzwerk nach einer Überprüfung der Netzkennung zu gestatten.

14. System nach Anspruch 13, **dadurch gekennzeichnet, dass** das
Mobilfunknetzwerk aus kleinteiligen, engmaschigen Funkzellen einheitlicher oder auch unterschiedlicher Funktechnik zusammengesetzt ist, deren Signalleistung die Signalleistung anderer empfangbarer Mobilfunknetze lokal übersteigt.

15. System nach einem der Ansprüche 13 oder 14, **dadurch gekennzeichnet, dass** das Mobilfunknetzwerk mit weiteren verfügbaren Mobilfunknetzwerken gekoppelt ist, insbesondere über das Internet.

## Claims

1. Method for operating a cellular mobile radio network having one or more radio cells, in which cellular mobile radio network it is possible for mobile radio terminals to register for use of the services of the mobile radio network, wherein each mobile radio terminal registered in the mobile radio network is explicitly identifiable by a subscriber identity, wherein the subscriber identity of a registered mobile radio terminal is compared with a list of enabled subscriber identities and, in the event of a match, use of the services of the mobile radio network is enabled for the mobile radio terminal, and wherein, in the absence of a match for the subscriber identity with the list of the enabled subscriber identities, use of the services of the mobile radio network is disabled for this subscriber identity and/or for this mobile radio terminal, **characterized in that** each radio cell in the area to be covered is provided with a special network identifier that is not present in other mobile radio networks, wherein when there is a mobile radio terminal with a subscriber identity that is not enabled, this special network identifier is stored in the home location register and the mobile radio terminal is prevented from changing to another mobile radio network after a check on the network identifier, and wherein when there is a mobile radio terminal with an enabled subscriber identity, another special network identifier is stored in the home location register and the mobile radio terminal is prevented from changing to another mobile radio network after a check on the network identifier.

2. Method according to Claim 1, **characterized in that** each radio cell identifies itself by means of a global cell identification to each mobile radio terminal registered in the cell, wherein the global cell identification particularly includes a network identifier that is not used by other mobile radio networks, and a roaming network configuration is effected with other mobile radio networks such that mobile radio terminals associated with other mobile radio networks can register in the mobile radio network.

3. Method according to Claim 2, **characterized in that** the global cell identification is made up of at least a country identifier, a network identifier, a location identifier and a radio cell identifier.

4. Method according to one of the preceding claims, **characterized in that** a mobile radio terminal with a subscriber identity that is not enabled is prevented from registering in another receivable mobile radio network.

5. Method according to one of the preceding claims, **characterized in that** the attempt at a registered mobile radio terminal changing to another mobile radio network involves the subscriber identity on the associated SIM/USIM being used to effect a check on the current network identifier registered in the home location register.

6. Method according to one of the preceding claims, **characterized in that** all registered mobile radio terminals are initially captured by means of the subscriber identity on the associated SIM/USIM, so that changing to another network is impossible at least until a comparison against the list of enabled subscriber identities.

7. Method according to one of the preceding claims, **characterized in that** a disable command is sent to the home network of a mobile radio terminal with a subscriber identity that is not enabled, and this subscriber identity is disabled there for communication in this and other mobile radio networks.

8. Method according to one of the preceding claims, **characterized in that** the check on the use authorization is effected on the basis of the access class of the mobile radio terminal.

9. Method according to one of the preceding claims, **characterized in that** the mobile radio network is coupled to further available mobile radio networks, particularly via the Internet.

10. Method according to one of the preceding claims, **characterized in that** roaming relationships exist with further mobile radio networks, and the list of enabled subscriber identities also has enabled subscriber identities from international and/or foreign mobile radio networks.

11. Method according to one of the preceding claims, **characterized in that** for the subscriber identity of a mobile radio terminal that is not registered in this mobile radio network, erasure from a list of enabled subscriber identities can be used to disable use of the services of this mobile radio network and/or a disable command to the home network can be used to disable use of the services of the home network.

12. Method according to Claim 11, **characterized in that** information relating to a subscriber identity of a mobile radio terminal not registered in this mobile radio network is received and evaluated online and/or offline, in particular is received from detection devices and/or from other mobile radio networks and/or from authorities and the like.

13. Cellular mobile radio system for carrying out and applying a method according to one of the preceding claims, having a mobile radio network having one or more radio cells, in which mobile radio network it is possible for mobile radio terminals to register the use of the services of the mobile radio system, wherein the system is set up to compare the subscriber identity of each registered mobile radio terminal and/or of an unregistered mobile radio terminal with a list of enabled subscriber identities that is stored in a database associated with the system and, in the event of a match, to enable use of the services of the mobile radio network for the mobile radio terminal, and, in the absence of a match for the subscriber identity with the list of enabled subscriber identities, to disable use of the services of the mobile radio network for this subscriber identity and/or for this mobile radio terminal, **characterized in that** each radio cell in the area to be covered has a special network identifier that is not present in other mobile radio networks, wherein the system is set up to store this special network identifier in the home location register, and to prevent the mobile radio terminal from changing to another mobile radio network after a check on the network identifier, when there is a mobile radio terminal with a subscriber identity that is not enabled, and to store another special network identifier in the home location register, and to permit the mobile radio terminal to change to another mobile radio network after a check on the network identifier, when there is a mobile radio terminal with an enabled subscriber identity.

14. System according to Claim 13, **characterized in that** the mobile radio network is made up of detailed, narrow-meshed radio cells using standard or even different radio engineering whose signal power locally exceeds the signal power of other receivable mobile radio networks.

15. System according to either of Claims 13 and 14, **characterized in that** the mobile radio network is coupled to further available mobile radio networks, particularly via the Internet.

## Revendications

1. Procédé de mise en fonctionnement d'un réseau mobile cellulaire comportant une ou plusieurs cellules radio, sur lequel des terminaux mobiles peuvent être enregistrés pour l'utilisation des services du réseau mobile, dans lequel chaque terminal mobile enregistré sur le réseau mobile peut être identifié de manière unique par une identité d'abonné, dans lequel l'identité d'abonné d'un terminal mobile enregistré est comparé à une liste d'identités d'abonnés libérées et, lors d'une concordance, l'utilisation des services du réseau mobile est autorisée pour le terminal mobile, et dans lequel, lors d'une non-concordance de l'identité d'abonné avec la liste des identités d'abonné libérée, un blocage de l'utilisation des services du réseau mobile est effectué pour ladite identité d'abonné et/ou pour ledit terminal mobile, **caractérisé en ce que** chaque cellule radio obtient dans la zone à desservir une identification de réseau spéciale qui n'est pas présente dans d'autres réseaux mobiles, dans lequel, lorsqu'un terminal mobile ne possède pas d'identité d'abonné libérée, ladite identification de réseau spéciale est stockée dans le registre de localisation nominal et un basculement du terminal mobile sur un autre réseau mobile est empêché après une vérification de l'identification de réseau, et dans lequel, lorsqu'un terminal mobile possède une identité d'abonné libérée, une autre identification de réseau spéciale est stockée dans le registre de localisation nominal et un basculement du terminal mobile sur un autre réseau mobile est autorisé après une vérification de l'identification de réseau.

2. Procédé selon la revendication 1, **caractérisé en ce que** chaque cellule radio s'identifie au moyen d'une identification de cellule globale par rapport à chaque terminal mobile enregistré dans la cellule, dans lequel l'identification de cellule globale contient en particulier une identification de réseau non utilisée par d'autres réseaux mobiles, et une configuration de réseau d'itinérance sur d'autres réseaux mobiles est effectuée de manière à ce que des terminaux mobiles associés à d'autres réseaux mobiles puissent s'enregistrer sur le réseau mobile.

3. Procédé selon la revendication 2, **caractérisé en ce que** l'identification de cellule globale est composée d'au moins une identification de pays, d'une identification de réseau, d'une identification de lieu et d'une identification de cellule radio.

4. Procédé selon l'une quelconque des revendications précédentes, **caractérisé en ce qu'**un enregistrement d'un terminal mobile ayant une identité d'abonné non libérée est empêché sur un autre réseau mobile pouvant être capté.

5. Procédé selon l'une quelconque des revendications précédentes, **caractérisé en ce que**, lors d'une tentative de basculement d'un terminal mobile enregistré sur un autre réseau mobile au moyen de l'identité d'abonné stockée sur le module SIM/USIM associé, une vérification de l'identification de réseau enregistrée actuelle est effectuée dans le registre de localisation nominale.

6. Procédé selon l'une quelconque des revendications précédentes, **caractérisé en ce que** tous les terminaux mobiles enregistrés sont tout d'abord acquis au moyen de l'identité d'abonné contenue dans le module SIM/USIM associé de manière à ce qu'un basculement sur un autre réseau ne soit pas possible du moins jusqu'à une comparaison à la liste d'identité d'abonnés libres.

7. Procédé selon l'une quelconque des revendications précédentes, **caractérisé en ce qu'**une instruction de blocage est envoyée au réseau de rattachement d'un terminal mobile ayant une identité d'abonné non libérée et **en ce que** cette dernière est bloquée sur ce réseau pour les communications effectuées sur ledit réseau mobile et d'autres réseaux mobiles.

8. Procédé selon l'une quelconque des revendications précédentes, **caractérisé en ce que** la vérification du droit d'utilisation est effectuée sur la base de la classe d'accès du terminal mobile.

9. Procédé selon l'une quelconque des revendications précédentes, **caractérisé en ce que** le réseau mobile est couplé à d'autres réseaux mobiles disponibles, en particulier par l'intermédiaire de l'Internet.

10. Procédé selon l'une quelconque des revendications précédentes, **caractérisé en ce que** des relations d'itinérance sont établies avec d'autres réseaux mobiles et **en ce que** la liste des identités d'abonnés libérées comporte également des réseaux mobiles internationaux et/ou étrangers de ce type.

11. Procédé selon l'une quelconque des revendications précédentes, **caractérisé en ce que**, pour l'identité d'abonné d'un terminal mobile non enregistré sur ledit réseau mobile, un blocage de l'utilisation des services dudit réseau mobile peut être effectué au moyen d'une suppression effectuée sur une liste d'identités d'abonnés libérées et/ou un blocage de l'utilisation des services du réseau de rattachement peut être effectué au moyen d'une instruction de blocage envoyée au réseau de rattachement.

12. Procédé selon la revendication 11, **caractérisé en ce que** des informations concernant une identité d'abonné d'un terminal mobile non enregistré sur ledit réseau sont reçues et évaluées en ligne et/ou hors ligne, en particulier par des dispositifs de détection et/ou par d'autres réseaux mobiles et/ou par des autorités et autres.

13. Système mobile cellulaire destiné à mettre en oeuvre et à appliquer un procédé selon l'une quelconque des revendications précédentes, comportant un réseau mobile comprenant une ou plusieurs cellules radio, sur lequel des terminaux mobiles peuvent s'enregistrer pour utiliser les services du réseau mobile, dans lequel le système est conçu pour comparer l'identité d'abonné de chaque terminal mobile enregistré et/ou d'un terminal mobile non enregistré à une liste d'identités d'abonnés libérées stockée dans une base de données associée au système et, lors d'une concordance, pour autoriser le terminal mobile à utiliser les services du réseau mobile, et lors d'une non-concordance de l'identité d'abonné avec la liste d'identités d'abonnés libérées, pour effectuer un blocage de l'utilisation des services du réseau mobile pour ladite identité d'abonné et/ou pour ledit terminal mobile, **caractérisé en ce que** chaque cellule radio, sur la zone à desservir, possède une identification de réseau spéciale qui n'est pas présente dans d'autres réseaux mobiles, dans lequel le système est conçu pour stocker ladite identification de réseau spéciale dans le registre de localisation nominal lorsqu'un terminal mobile possède une identité d'abonné non libérée et pour empêcher un basculement du terminal mobile sur un autre réseau mobile après une vérification de l'identification de réseau, et pour stocker une autre identification de réseau spéciale dans le registre de localisation nominal pour un terminal mobile ayant une identité d'abonné libérée et pour autoriser un basculement du terminal mobile sur un autre réseau mobile après une vérification de l'identification de réseau.

14. Système selon la revendication 13, **caractérisé en ce que** le réseau mobile est composé de petites cellules radio à haute densité utilisant des techniques radio homogènes ou différentes, dont la puissance de signal dépasse localement la puissance de signal d'autres réseaux mobiles pouvant être captés.

15. Système selon la revendication 13 ou 14, **caractérisé en ce que** le réseau mobile est couplé à d'autres réseau mobiles disponibles, en particulier par l'intermédiaire de l'Internet.
